# EUROPÄISCHE PATENTSCHRIFT

(11) **EP 2 072 304 B1**
(45) Veröffentlichungstag und Bekanntmachung des Hinweises auf die Patenterteilung: **17.02.2016**
(21) Anmeldenummer: 08022214.4
(22) Anmeldetag: 19.12.2008
(51) Int. Cl.: B60J 7/043

(54) **Schiebedachsystem für ein Kraftfahrzeug**
Retractable roof system for a motor vehicle
Système de toit coulissant pour un véhicule automobile

(30) Priorität: 19.12.2007 DE 102007061091
(43) Veröffentlichungstag der Anmeldung: 24.06.2009
(73) Patentinhaber: Roof Systems Germany GmbH, 63128 Dietzenbach (DE)
(72) Erfinder: Grimm, Rainer, 60598 Frankfurt (DE); Röder, Joachim, 63165 Mühlheim (DE); Ries, Claudia, 64405 Lichtenberg (DE); Röhnke, Manfred, 63322 Rödermark (DE)
(74) Vertreter: Prinz & Partner mbB

(56) Entgegenhaltungen:
- EP-A- 0 638 452
- EP-A- 1 533 159
- WO-A1-2007/079747
- DE-A1-102005 059 286
- DE-A1-102006 002 064

## Beschreibung

Die Erfindung betrifft ein Schiebedachsystem für ein Kraftfahrzeug. Die Erfindung betrifft insbesondere ein sogenanntes Spoilerschiebedachsystem, bei dem der Deckel des Schiebedachsystems nach außen über einen feststehenden Dachbereich nach hinten verfahren werden kann.

Die EP 0 638 452 A1 zeigt eine Einrichtung zum Öffnen oder Schließen eines Deckels eines Hebe-Schiebedaches. Die Einrichtung hat einen Antriebsschlitten sowie einen vorderen Ausstellmechanismus und einen hinteren Ausstellmechanismus. Der vordere Ausstellmechanismus weist ein Gleitelement, eine Gestänge sowie einen zwischen Gleitelement und Gestänge angeordneten Hebel auf. Der hintere Ausstellmechanismus weist einen Hebel auf, der in einer Kulisse gelagert ist. Die Einrichtung hat allerdings eine relativ große Bauhöhe.

Die DE 10 2006 002 064 A1 zeigt ein Schiebedachsystem mit einem vorderen und einem hinteren Ausstellmechanismus. Der hintere Ausstellmechanismus weist einen Ausstellhebel auf, der in eine Ausstellkulisse eines Schlittens eingreift. Der vordere Ausstellmechanismus weist einen Ausstellhebel auf, der mittels eines Kopplungshebels mit dem Schlitten verbunden ist. Im Kopplungshebel ist eine Kulisse vorgesehen, mittels der ein vorbestimmter Leerlauf zwischen dem Schlitten und dem vorderen Ausstellmechanismus erzielt wird. Wenn der Schlitten aus der Ausgangsstellung, in der der Deckel des Schiebedachsystems geschlossen ist, nach hinten bewegt wird, wird zuerst die hintere Kante des Deckels mittels des hinteren Ausstellmechanismus angehoben. Der vordere Rand des Deckels verbleibt (abgesehen von einer kleinen Verschiebung nach hinten) in seiner Ausgangsstellung, da der Schlitten den Leerweg der Kulisse im Kopplungshebel abfährt. Wenn das Ende der Kulisse im Kopplungshebel erreicht ist, wird der vordere Ausstellmechanismus betätigt, und auch der vordere Rand des Deckels wird angehoben. Dann wird, wenn der Schlitten weiter nach hinten verschoben wird, der gesamte Deckel mitsamt der Ausstellmechanismen in den Führungsschienen nach hinten verschoben, so dass die Dachöffnung freigeben wird.

Erfindungsgemäß ist dagegen ein Schiebedachsystem für ein Kraftfahrzeug vorgesehen, mit zwei zueinander zumindest annähernd parallelen Führungsschienen und einem Schlitten in jeder Führungsschiene, der in der Längsrichtung des Fahrzeugs verschiebbar ist, wobei ein vorderer Ausstellmechanismus und ein hinterer Ausstellmechanismus vorgesehen sind, die einem vorderen Rand bzw. einem hinteren Rand des Deckels des Schiebedachsystems zugeordnet sind, wobei der vordere Ausstellmechanismus einen Übersetzungshebel und der hintere Ausstellmechanismus einen Ausstellhebel aufweisen und wobei der Schlitten bei seiner Verschiebung entlang der Führungsschiene nach hinten zuerst mit dem hinteren Ausstellmechanismus und anschließend mit dem vorderen Ausstellmechanismus gekoppelt ist wobei jeder Ausstellmechanismus einen Rasthaken aufweist, der automatisch an den Schlitten angekoppelt werden kann.

Ein besonderer Vorteil des erfindungsgemäßen Systems besteht in der geringen Bauhöhe, die weniger als 40mm beträgt.

Das Schiebedachsystem ist schematisch in den beigefügten Figuren gezeigt.

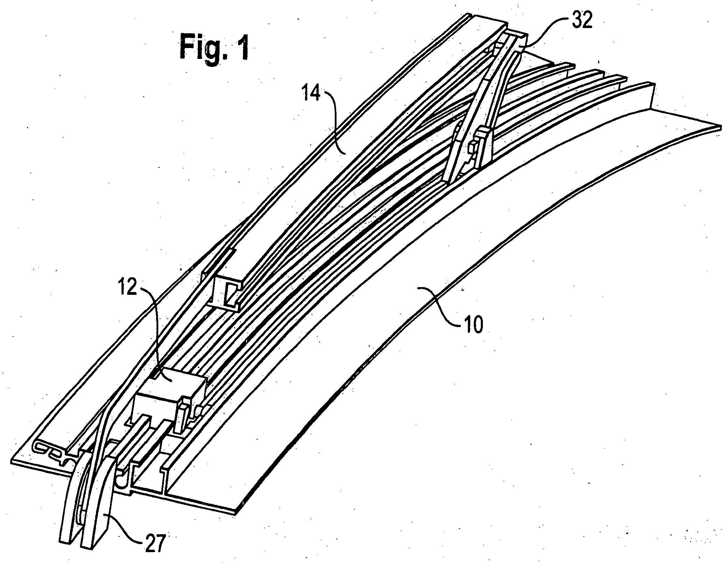

- Figur 1 zeigt eine perspektivische Ansicht.
- Figur 2 zeigt das System in einem vollständig geschlossenen Zustand, wobei oben eine Gesamtseitenansicht gezeigt ist und unten eine vergrößerte Ansicht des vorderen und des hinteren Abschnittes.
- Figur 3 zeigt in Ansichten entsprechend Figur 2 das System in einer sogenannten Lüfterstellung, in welcher der hintere Ende des Deckels nach außen ausgestellt ist.
- Figur 4 zeigt in Ansichten entsprechend Figur 2 das System in einer Zwischenstellung, in der auch der vordere Rand des Deckels vollständig ausgestellt ist.
- Figur 5 zeigt in Ansichten entsprechend Figur 2 das System in einem Zustand mit vollständig geöffnetem Deckel.

Das Schiebedachsystem weist zwei einander parallel gegenüberliegende Führungsschienen 10 auf, von denen in den Figuren nur jeweils eine gezeigt ist. In den Führungsschienen 10 ist ein Schlitten 12 verschiebbar angeordnet. Durch Verschieben des Schlittens von vorne nach hinten wird das Schiebedachsystem aus einem Zustand mit vollständig geschlossenem Deckel in einen Zustand mit vollständig geöffnetem Deckel überführt. Der in den Figuren nicht gezeigte Deckel ist dabei an einem Deckelhalter 14 befestigt. Die Position des Deckelhalters 14 und damit des Deckels wird bestimmt durch einen vorderen Ausstellmechanismus und einen hinteren Ausstellmechanismus.

Der vordere Ausstellmechanismus weist einen Kipphebel 20 auf, der drei Gelenke miteinander verbindet. Ein erstes Gelenk 22 ist mit einer Zugstange 23 verbunden, die mit dem Schlitten 12 gekoppelt werden kann. Ein zweites Gelenk 24 ist nach Art eines Gleitsteins ausgeführt, der in einer Führungskulisse 26 der Führungsschiene 10 gleiten kann. In dieser Kulisse ist auch das Gelenk 22 geführt. Ein drittes Gelenk 28 koppelt den Kipphebel 20 schwenkbar mit dem Deckelhalter 14. Die Führungskulisse 26 erstreckt sich entlang der Führungsschiene 10 und weist an ihrem vorderen Eck, also an dem in den Figuren linken Ende, einen steil schräg nach unten abfallenden Hubabschnitt 27 auf.

Der hintere Ausstellmechanismus weist einen Lagerblock 30 auf, der bei dieser Ausführungsform feststehend an der Führungsschiene 10 angeordnet ist. In dem Lagerblock 30 ist ein Ausstellhebel 32 verschiebbar gelagert, der mit einer Ausstellrippe 34 versehen ist. Diese gleitet im Lagerblock 30. Der Ausstellhebel 32 ist an seinem hinteren, also in den Figuren rechten Ende schwenkbar und verschiebbar mit dem Deckelhalter 14 gekoppelt. An seinem vorderen Ende ist er fest mit einer Druckstange 36 gekoppelt, die über ein Gleitstein 38 verschiebbar in der Führungsschiene 10 geführt ist und mit ihrem vorderen Ende mit dem Schlitten 12 gekoppelt werden kann.

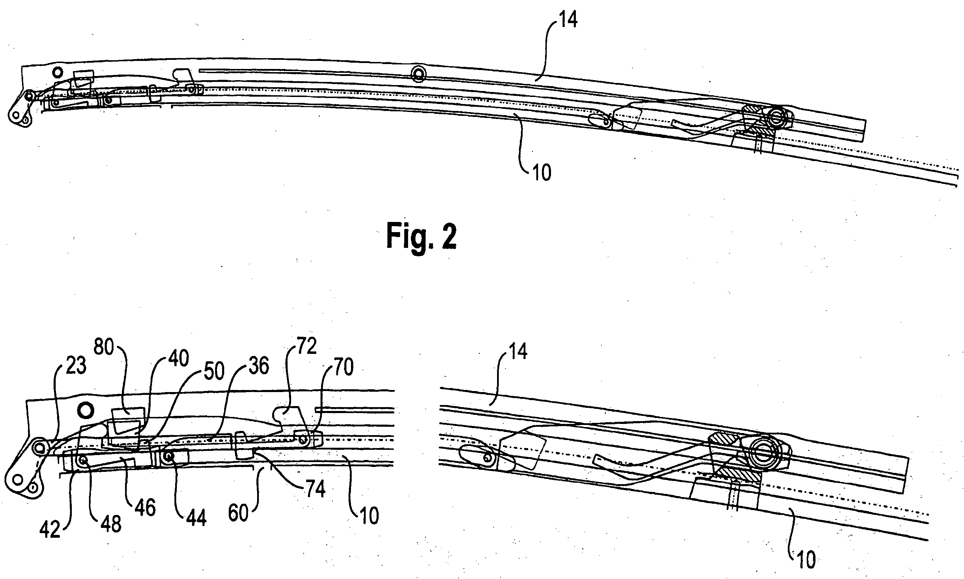

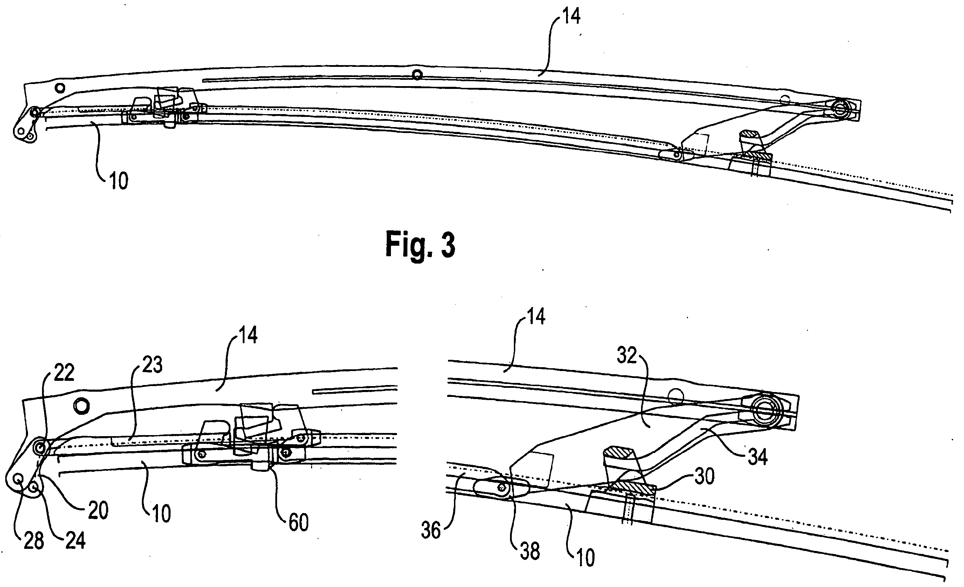

Der Schlitten 12 ist im in Figur 2 gezeigten Ausgangszustand, in welchem er maximal nach vorne bzw. links verstellt ist, über einen Mitnehmer 40 mit der Druckstange 36 gekoppelt. Zu diesem Zweck ist ein Druckstangenschlitten 42 vorgesehen, der verschiebbar in der Führungsschiene 10 aufgenommen ist und über ein Gelenk 44 mit der Druckstange 36 gekoppelt ist. Am Druckstangenschlitten 42 ist schwenkbar ein Rasthaken 46 aufgenommen, der hier als zweiarmiger Hebel ausgebildet ist, der um ein Gelenk 48 schwenkbar ist. Die beiden Arme des Rasthakens 46 stehen etwa im rechten Winkel zueinander, und der sich etwa waagrecht in der Führungsschiene erstreckende, untere Arm ist an seinem vorderen Ende unten mit einem Rastfortsatz versehen und nach oben mit einer Haltenase 50. In der in Figur 2 gezeigten Stellung stützt sich der Rastvorsprung auf einer Führungsfläche der Führungsschiene ab und hält den Rasthaken in seiner "oberen" Position, in welcher die Haltenase 50 mit dem Mitnehmer 40 überlappt. Der Druckstangenschlitten 42 ist somit über den Mitnehmer 40 mit dem Schlitten 12 gekoppelt. Wenn der Schlitten nach rechts verstellt wird, nimmt er den Druckstangenschlitten 42 mit, der wiederum über die Druckstange 36 den Ausstellhebel 32 nach rechts verschiebt, wodurch dieser in die in Figur 3 gezeigte, ausgestellte Stellung verschwenkt wird. Die maximal ausgestellte Position ist erreicht, sobald der Rastvorsprung des Rasthakens 46 in eine Rastaussparung 60 eintauchen kann, die im Boden der Führungsschiene vorgesehen ist. Durch das Eintauchen wird der Rasthaken 46 geringfügig im Uhrzeigersinn verschwenkt, so daß er den Mitnehmer 40 freigibt. Gleichzeitig ist die Druckstange 36 relativ zur Führungsschiene verriegelt.

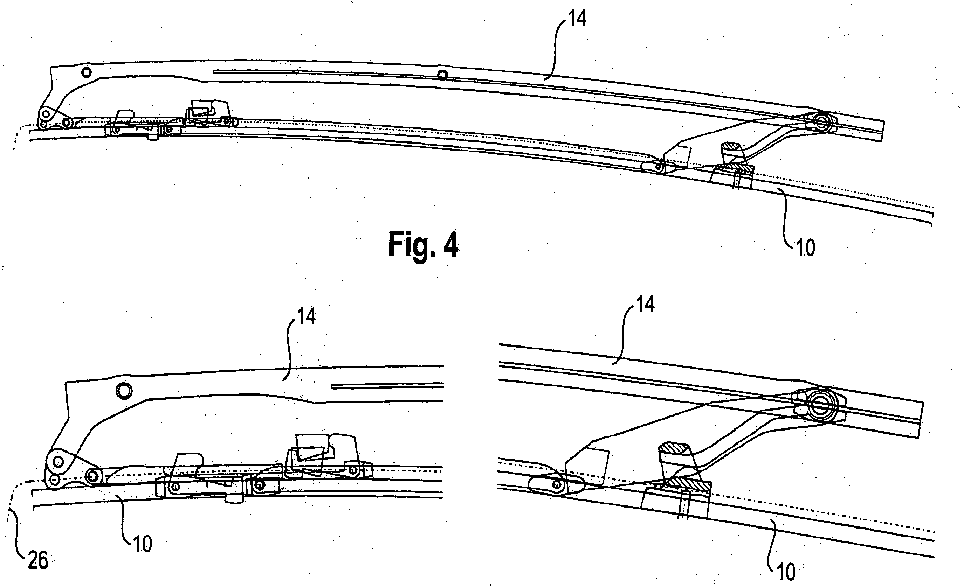

Nach Freigeben des Rasthakens 46 koppelt sich der Schlitten 12 an einen Zugstangenschlitten 70 an, der mit einem Rasthaken 72 versehen ist. Dieser ist in der in Figur 2 gezeigten Ausgangsstellung in eine Rastöffnung 74 eingerastet, so daß die mit dem Zugstangenschlitten gekoppelte Zugstange 23 in Längsrichtung stationär gehalten ist. Der Schlitten 12 nimmt bei seiner weiteren Bewegung nach rechts mittels eines Mitnehmers 80 den Zugstangenschlitten 70 mit, indem er auf den sich nach oben erstreckenden Arm des Rasthakens 72 aufläuft und diesen im Uhrzeigersinn verschwenkt, so daß er aus der Rastöffnung 74 herausgeschwenkt wird. Anschließend wird er nach rechts mitgenommen, wobei über die Zugstange 23 der Kipphebel 20 nach oben gezogen und dann im Uhrzeigersinn geschwenkt wird (vgl. die Figuren 3 und 4), wodurch sich ein Übersetzungseffekt einstellt. Durch das Verschwenken des Kipphebels 20 um knapp 90° wird das Gelenk 28 und damit der Deckelhalter 14 im vorderen Bereich um einen Betrag angehoben, der größer ist als die vertikale Bewegung des Gelenks 24 in der Führungskulisse 26.

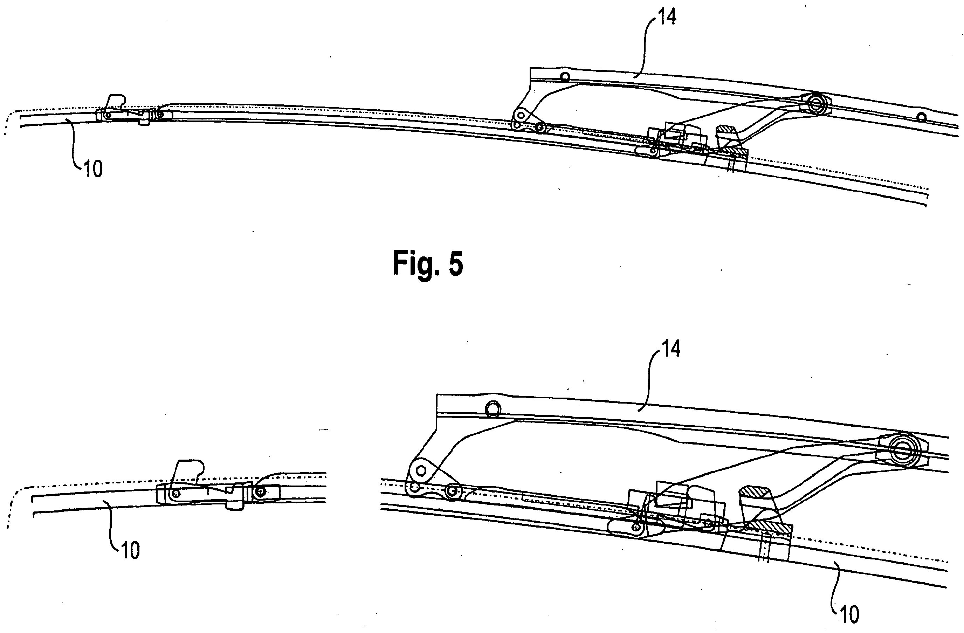

Nachdem das Schiebedachsystem den in Figur 4 gezeigten Zustand erreicht hat, in welchem der Deckelhalter 14 maximal nach außen ausgestellt ist, kann der Deckelhalter 14 durch weiteres Verschieben des Schlittens 12 nach hinten verschoben werden, bis er die in Figur 5 gezeigte Endstellung erreicht hat. Dabei verschiebt sich der Deckelhalter relativ zum Ausstellhebel.

Es ist auch denkbar, daß anschließend an die in Figur 5 gezeigte Stellung der Lagerblock 30 entriegelt und weiter nach hinten mitgenommen wird.

Wenn der Deckel des Schiebedachs wieder geschlossen werden soll, wird der Schlitten nach vorne verstellt. Dadurch läuft die Bewegung in der umgekehrten Reihenfolge ab. Zunächst wird also der vordere Ausstellmechanismus über die Zugstange nach vorne verschoben, bis der Kipphebel in den Hubabschnitt 27 der Führungskulisse 26 abtaucht. Anschließend erfolgt die Umkopplung des Schlittens, so daß der hintere Ausstellmechanismus wieder abgesenkt wird.

## Patentansprüche

1. Schiebedachsystem für ein Kraftfahrzeug, mit zwei zueinander zumindest annähernd parallelen Führungsschienen (10) und einem Schlitten (12) in jeder Führungsschiene (10), der in der Längsrichtung des Fahrzeugs verschiebbar ist, wobei ein vorderer Ausstellmechanismus und ein hinterer Ausstellmechanismus vorgesehen sind, die einem vorderen Rand bzw. einem hinteren Rand des Deckels des Schiebedachsystems zugeordnet sind, wobei der vordere Ausstellmechanismus einen Übersetzungshebel (20) und der hintere Ausstellmechanismus einen Ausstellhebel (32) aufweisen und wobei der Schlitten (12) bei seiner Verschiebung entlang der Führungsschiene (10) nach hinten zuerst mit dem hinteren Ausstellmechanismus und anschließend mit dem vorderen Ausstellmechanismus gekoppelt ist und wobei jeder Ausstellmechanismus einen Rasthaken (46, 72) aufweist, der automatisch an den Schlitten (12) angekoppelt werden kann.

## Claims

1. A sunroof system for a motor vehicle, comprising two guide rails (10) that are at least approximately parallel to one another, and a slide (12) in each guide rail (10), the slide being displaceable in the longitudinal direction of the vehicle, a front lifting mechanism and a rear lifting mechanism being provided which are associated with a front edge and a rear edge, respectively, of the cover of the sunroof system, the front lifting mechanism including a transmission lever (20) and the rear lifting mechanism including a lifting lever (32), and the slide (12) being first coupled to the rear lifting mechanism and subsequently to the front lifting mechanism when it is displaced rearwards along the guide rail (10), and each lifting mechanism including a latching hook (46, 72) which can be automatically coupled to the slide (12).

## Revendications

1. Système de toit ouvrant pour véhicule automobile, comportant deux rails de guidage (10) qui sont au moins approximativement parallèles l'un à l'autre, et un chariot (12) dans chaque rail de guidage (10) qui est apte à être déplacé dans le sens longitudinal du véhicule, un mécanisme de soulèvement avant et un mécanisme de soulèvement arrière étant prévus, lesquels sont associés à un bord avant et à un bord arrière, respectivement, du couvercle du système de toit ouvrant, le mécanisme de soulèvement avant présentant un levier de transmission (20) et le mécanisme de soulèvement arrière un levier de soulèvement (32), et le chariot (12) étant d'abord couplé au mécanisme de soulèvement arrière et ensuite au mécanisme de soulèvement avant lors de son déplacement vers l'arrière le long du rail de guidage (10), et chaque mécanisme de soulèvement présentant un crochet d'enclenchement (46 ; 72) qui peut automatiquement être accouplé au chariot (12).
